# EUROPÄISCHE PATENTSCHRIFT

(11) **EP 2 512 207 B1**
(45) Veröffentlichungstag und Bekanntmachung des Hinweises auf die Patenterteilung: **05.06.2013**
(21) Anmeldenummer: 11162756.8
(22) Anmeldetag: 15.04.2011
(51) Int. Cl.: H05B 33/08

(54) **Treiberschaltung und Verfahren zum Versorgen einer LED sowie Leuchtmittel**
Driver circuit and method for powering an LED and illuminant
Circuit d'excitation et procédé d'alimentation d'une DEL ainsi que moyen d'éclairage

(43) Veröffentlichungstag der Anmeldung: 17.10.2012
(73) Patentinhaber: ATLAS ELEKTRONIK GmbH, 28309 Bremen (DE)
(72) Erfinder: Wittschief, Norbert, 28832, Achim (DE); Wiesner, Uwe, 28355, Bremen (DE)

(56) Entgegenhaltungen:
- WO-A2-2008/022270
- WO-A2-2008/112820
- US-A1- 2005 002 211
- US-A1- 2009 230 891
- US-A1- 2011 080 110

## Beschreibung

Die Erfindung betrifft eine Treiberschaltung zur Versorgung mindestens einer LED nach dem Oberbegriff von Anspruch 1 und ein Verfahren zum Versorgen mindestens einer LED mit einer Treiberschaltung nach dem Oberbegriff von Anspruch 6. Ferner betrifft die Erfindung ein Leuchtmittel mit einer Treiberschaltung nach dem Oberbegriff von Anspruch 11.

Gemäß dem Stand der Technik werden anstatt Glühfadenlampen immer häufiger Leuchtdioden (LEDs) zur künstlichen Beleuchtung genutzt. Während Glühfadenlampen direkt mit der sinusförmigen Netzwechselspannung des allgemeinen Strom- oder Spannungsnetzes betrieben werden können, müssen LEDs in einem definierten Arbeitspunkt betrieben werden. Dieser Arbeitspunkt zeichnet sich durch eine konstant einzustellende Versorgungsspannung oder Versorgungsstromstärke aus. Zur Versorgung von LEDs mit der sinusförmigen Netzwechselspannung werden daher LED-Treiberschaltungen benötigt, um diese Versorgungsspannung oder Versorgungsstromstärke für die LEDs aus der sinusförmigen Netzwechselspannung zu erzeugen.

Aufgrund der charakteristischen Kennlinie einer LED ist ein konstanter Arbeitspunkt am genauesten durch eine konstant geregelte Versorgungsstromstärke einzustellen. Der Betrieb von LEDs in einem möglichst genau eingestellten Arbeitspunkt ist notwendig, da durch Erhöhen der Spannung oder der Stromstärke über den Arbeitspunkt eine schnellere Alterung der LEDs auftritt. Wird hingegen der Arbeitspunkt durch Absenken der Spannung oder der Stromstärke unterschritten, so wird die LED dunkler oder emittiert kein Licht mehr.

Gemäß dem Stand der Technik weisen LED-Treiberschaltungen zur Versorgung von LEDs zunächst eine Gleichrichtschaltung auf. Mit der Gleichrichtschaltung wird die sinusförmige Netzwechselspannung, die zumindest innerhalb der Europäischen Union eine Solleffektivspannung von 230 Volt aufweist, gleichgerichtet. Außerdem weisen LED-Treiberschaltungen einen oder mehrere Spannungsregler auf. Diese Spannungsregler werden durch geeignete Beschaltung als Stromregler oder Konstantstromquelle betrieben, um die Versorgungsstromstärke zum Versorgen der LED möglichst genau im Arbeitspunkt bereitzustellen. Über den für die Regelung eingesetzten Spannungsreglern fällt dabei ein Anteil der gleichgerichteten sinusförmigen Netzwechselspannung ab, der von der Gleichrichtschaltung zur Verfügung gestellt wird und nicht über den LEDs für die Versorgung der LEDs abfällt. Diese über einem Spannungsregler abfallende Spannung multipliziert mit dem durch den Spannungsregler fließenden Strom stellt größtenteils die Verlustleistung einer derartigen LED-Treiberschaltung dar.

Um den Spannungsabfall über den Spannungsreglern zu minimieren, werden in bekannten LED-Treiberschaltungen daher Spannungswandler, die auch DC/DC-Wandler genannt werden, eingesetzt. Diese Spannungswandler reduzieren zunächst die mit der Gleichrichtschaltung gleichgerichtete sinusförmige Netzwechselspannung, sodass diese nahezu vollständig über den LEDs abfällt. Eine nahezu vollständig über den LEDs abfallende Spannung führt dann zu einer Minimierung des Spannungsabfalls über den Spannungsreglern.

Diese LED-Treiberschaltungen stellen einen nichtlinearen Verbraucher dar, da der von der Treiberschaltung aufgenommene Eingangsstrom nicht den gleichen Phasenverlauf wie die sinusförmige Netzwechselspannung aufweist. Nichtlineare Verbraucher führen zu einer Belastung des allgemeinen Strom- bzw. Spannungsnetzes mit einer Blindleistung. Diese Blindleistung kann im Verbraucher nicht genutzt werden und belastet lediglich die Versorgungsnetze und die Erzeugeranlagen. Es müssen daher Maßnahmen, z.B. eine Kompensation der Blindleistung, getroffen werden, um das allgemeine Stromnetz nicht mehr als zulässig zu belasten. Zum Vorantreiben dieser Maßnahmen sind bereits unterschiedliche Normen in Kraft getreten, die eine Blindleistungskompensation in bestimmten Bereichen vorschreiben.

Es ist daher bekannt, bei LED-Treiberschaltungen eine Blindleistungskompensation durch eine Leistungsfaktorkorrekturschaltung, die auch mit dem englischsprachigen Begriff Power-Factor-Correction-Schaltung (PFC) benannt wird, zu bewirken. Diese Leistungsfaktorkorrekturschaltung ermittelt den Verlauf der gleichgerichteten sinusförmigen Netzwechselspannung und lädt eine Kapazität mit einem aus der gleichgerichteten sinusförmigen Netzwechselspannung erzeugten Strom. Dieser Strom wird dabei durch die Leistungsfaktorkorrekturschaltung derart erzeugt, dass der aus dem allgemeinen Stromnetz aufgenommene Strom den gleichen zeitlichen Verlauf wie die sinusförmige Netzwechselspannung des allgemeinen Strom- bzw. Spannungsnetzes aufweist. Der Phasenverlauf des aufgenommen Stroms entspricht also dem Phasenverlauf der sinusförmigen Netzwechselspannung. Die von der Leistungsfaktorkorrekturschaltung geladene Kapazität stellt einen Energiespeicher dar, mit dessen Energie der Arbeitspunkt der LEDs in oben beschriebener Weise, z.B. mit einem Spannungswandler und Spannungsreglern, eingestellt wird. Der Spannungswandler der LED-Treiberschaltung wird also etwa eingangsseitig mit der Spannung der mit der Leistungsfaktorkorrekturschaltung geladenen Kapazität versorgt.

Derartige bekannte LED-Treiberschaltungen weisen jedoch das technische Problem auf, dass Spannungswandler zwar die Verlustleistung in den Spannungsreglem reduzieren, an sich aber einen schlechten Wirkungsgrad aufweisen und daher zu hohen Verlustleistungen in der Treiberschaltung führen.

US 2011/0080110 A1 zeigt eine weitere LED-Treiberschaltung mit einer Blindleistungskompensation durch eine Leistungsfaktorkorrekturschaltung. Bei dieser LED-Treiberschaltung wird eine einstellbare Leistungsfaktorkorrekturschaltung verwendet. Mit einer einstellbaren Leistungsfaktorkorrekturschaltung kann zum einen die Blindleistungskompensation erfolgen, während gleichzeitig die Ausgangsspannung der Leistungsfaktorkorrekturschaltung auf unterschiedliche Spannungen eingestellt werden kann.

Ferner weist diese LED-Treiberschaltung einen linearen Stromregler auf, über dem der Spannungsabfall minimiert wird, indem der Stromregler mit einer Ausgangsspannung der Leistungsfaktorkorrekturschaltung betrieben wird, die derart durch die einstellbare Leistungsfaktorkorrekturschaltung eingestellt wird, dass möglichst wenig Spannung über dem linearen Stromregler abfällt. Auch US 2005/0002211 A1 zeigt eine im Wesentlichen gleiche Schaltung mit einer Leistungsfaktorkorrekturschaltung.

Der Erfindung liegt daher die Aufgabe zugrunde, eine Treiberschaltung zu finden, die eine Blindleistungskompensation sowie eine Reduzierung der Verlustleistung in den Spannungsreglern erreicht und bei der zusätzlich die durch den schlechten Wirkungsgrad der Spannungsregler auftretende Verlustleistung minimiert wird.

Die Erfindung löst dieses Problem durch eine Treiberschaltung zur Versorgung mindestens einer LED gemäß Anspruch 1 und ein Verfahren zum Versorgen mindestens einer LED mit einer Treiberschaltung gemäß Anspruch 6 sowie ein Leuchtmittel gemäß Anspruch 11.

Die erfindungsgemäße Treiberschaltung weist zur Versorgung mindestens einer LED, also einer oder me7hrerer LEDs, einen Treibereingang auf. Mit dem Treibereingang wird der Treiberschaltung eine sinusförmige Netzwechselspannung zugeführt. Diese sinusförmige Netzwechselspannung entspricht insbesondere der sinusförmigen Netzwechselspannung des allgemeinen Stromnetzes bzw. des allgemeinen Spannungsnetzes. Das allgemeine Stromnetz bzw. das allgemeine Spannungsnetz weist in Europa eine Solleffektivspannung der sinusförmigen Netzwechselspannung von 230 Volt auf, wobei die Solleffektivspannung Schwankungen eines vorgegebenen Toleranzbereichs unterliegt.

Ferner weist die Treiberschaltung eine Gleichrichtschaltung auf. Mit der Gleichrichtschaltung wird die der Treiberschaltung zugeführte sinusförmige Netzwechselspannung gleichgerichtet.

Des Weiteren weist die Treiberschaltung eine Leistungsfaktorkorrekturschaltung mit einem Kondensator auf. Die Leistungsfaktorkorrekturschaltung weist ein steuerbares Lademittel zum Laden des Kondensators mit der in der Gleichrichtschaltung gleichgerichteten sinusförmigen Netzwechselspannung auf. Mit dem steuerbaren Lademittel wird der Kondensator auf eine von einer Steuerung des steuerbaren Lademittels abhängige Kondensatorspannung aufgeladen.

Ferner weist die Leistungsfaktorkorrekturschaltung eine Regelschaltung auf. Mit der Regelschaltung wird ein Istwert aus der Kondensatorspannung des Kondensators ermittelt und das steuerbare Lademittel derart gesteuert, dass sich eine Kondensatorspannung einstellt, deren ermittelter Istwert im Wesentlichen einem Sollwert entspricht. Die Regelschaltung regelt also den ermittelten Istwert auf einen Sollwert.

Zudem weist die Treiberschaltung einen Stromregler bzw. eine Konstantstromquelle auf. Der Stromregler bzw. die Konstantstromquelle weist z.B. einen Spannungsregler, insbesondere einen Linearregler, auf. Der Spannungsregler würde dann durch Rückkopplung eines geregelten Spannungsausgangs des Spannungsreglers mit einem Widerstand auf einen Regeleingang des Spannungsreglers als Stromregler betrieben werden. Mit dem Stromregler wird eine Treiberausgangsstromstärke bzw. Versorgungsstromstärke erzeugt, mit der an die Treiberschaltung, z.B. mit einem Treiberausgang, angeschlossene LEDs in einem Arbeitspunkt betrieben werden. Der Treiberausgangsstrom wird mit dem Stromregler aus der Kondensatorspannung des Kondensators erzeugt.

Ferner weist die Treiberschaltung eine Beeinflussungsschaltung auf, die den mit der Regelschaltung ermittelten Istwert abhängig von einem Beeinflussungsmaß beeinflusst. Das Beeinflussungsmaß kann z.B. einem positiven oder negativen absoluten Wert entsprechen, um den der Istwert erhöht oder abgesenkt wird.

Zusätzlich weist die Treiberschaltung ein Messmittel auf, mit dem eine über dem Stromregler abfallende Spannung ermittelt wird. Außerdem weist die Treiberschaltung ein Steuermittel auf, mit dem das Beeinflussungsmaß derart gesteuert bzw. eingestellt wird, dass die mit dem Messmittel gemessene Spannung minimiert wird. "Minimiert" bedeutet hier insbesondere, dass die gemessene Spannung auf einen Wert reduziert wird, der z.B. unter einem vorgegebenen oder festgelegten Schwellenwert liegt.

Überdies weist die Leistungsfaktorkorrekturschaltung einen Messzweig auf. Dieser Messzweig ist mit dem positiven Potential des Kondensators und einem Messeingang der Regelschaltung verbunden bzw. zwischen dieses positive Potential und diesen Messeingang geschaltet. Der Messzweig weist einen oder mehrere in Reihe und/oder parallel geschaltete Widerstände auf. Am Messeingang der Regelschaltung wird also ein Strom gemessen, der abhängig von der Kondensatorspannung des Kondensators sowie von dem Widerstand bzw. der Anordnung der Widerstände ist. Es ist z.B. vorstellbar, dass der Messzweig ein Zweipol mit einer Reichenschaltung von Widerständen ist, wobei der Zweipol mit einem Pol an den Messeingang der Regelschaltung und mit dem anderen Pol an das positive Potential des Kondensators angeschlossen ist.

Erfindungsgemäß ist die Beeinflussungsschaltung zwischen einem Knoten des Messzweigs und einem Bezugspotential der Treiberschaltung geschaltet. Es wird also z.B. von einem Messzweig ausgegangen, der aus einer Reihenschaltung mehrerer Widerstände besteht. Diese Reihenschaltung ist, wie der oben beschriebene Zweipol, zwischen das positive Potential und den Messeingang geschaltet. Die Beeinflussungsschaltung wäre dann z.B. mit einem Knoten bzw. einem Potential zwischen zwei Widerständen der Reihenschaltung aus Widerständen des Messzweigs verbunden.

Die Beeinflussungsschaltung weist einen Schalter, z.B. eine oder mehrere Transistoren, auf. Mit dem Schalter wird die Stromstärke eines Stroms variiert, der zwischen dem mit der Beeinflussungsschaltung verbundenen Knoten bzw. Pol des Messzweigs und dem Bezugspotential fließt. Ein Schalten des Schalters ist hier nicht auf einen "offenen" oder "geschlossenen" Zustand des Schalters beschränkt. Vielmehr ist ein betragsmäßig beliebig einstellbarer Stromfluss durch den Schalter einstellbar.

Die Beeinflussungsschaltung könnte z.B. eine Reihenschaltung aus einem Widerstand und dem Schalter aufweisen, wobei diese Reihenschaltung dann zwischen einem Knoten bzw. einem Pol des Messzweigs und einem Bezugspotential der Treiberschaltung verbunden wäre. Durch Schalten des Schalters würde die Stromstärke eines Stroms, der durch diese Reihenschaltung fließen würde, eingestellt bzw. variiert werden. Durch diesen Strom, der durch die Beeinflussungsschaltung vom Messzweig zum Bezugspotential fließt, wird der ermittelte Istwert beeinflusst bzw. manipuliert. Je höher die Stromstärke des durch den Schalter der Beeinflussungsschaltung fließenden Stroms ist, desto geringer wird der ermittelte Istwert.

Ferner weist die Erfindung ein Verfahren zum Versorgen mindestens einer LED mit einer Treiberschaltung auf. Zur Versorgung einer LED oder mehrerer z.B. in Reihe und/oder parallel geschalteter LEDs wird der Treiberschaltung in einem Zuführschritt eine sinusförmige Netzwechselspannung zugeführt. Diese sinusförmige Netzwechselspannung wird in einem Gleichrichtschritt gleichgerichtet, wodurch eine gleichgerichtete sinusförmige Netzwechselspannung entsteht. Dem Gleichrichtschritt ist ein Leistungsfaktorkorrekturschritt nachgeordnet.

Im Leistungsfaktorkorrekturschritt wird in einem Ladeschritt des Leistungsfaktorkorrekturschritts mit einem steuerbaren Lademittel ein Kondensator mit der gleichgerichteten sinusförmigen Netzwechselspannung auf eine Kondensatorspannung geladen. Die Kondensatorspannung ist hier abhängig von einer Steuerung des steuerbaren Lademittels. Ferner wird in einem Regelschritt des Leistungsfaktorkorrekturschritts ein Istwert aus der Kondensatorspannung mit einer Regelschaltung ermittelt. Der ermittelte Istwert wird mit der Regelschaltung auf einen Sollwert geregelt, indem die Regelschaltung das steuerbare Lademittel in Abhängigkeit des ermittelten Istwerts steuert. Dem Leistungsfaktorkorrekturschritt ist ein Stromregelschritt nachgeordnet.

Im Stromregelschritt wird eine Treiberausgangsstromstärke oder Versorgungsstromstärke aus der Kondensatorspannung mit einem als Stromregler, z.B. einem als Konstantstromquelle geschalteten Spannungsregler, erzeugt. Diese Treiberausgangsstromstärke dient der Versorgung, z.B. mit einem Treiberausgang, an der Treiberschaltung angeschlossener LEDs in einem definierten Arbeitspunkt. Im Stromregelschritt wird der Stromregler mit der Kondensatorspannung versorgt.

Ferner weist das erfindungsgemäße Verfahren einen Beeinflussungsschritt auf, bei dem der ermittelte Istwert in Abhängigkeit von einem Beeinflussungsmaß beeinflusst wird. Diese Beeinflussung wird mit einer Beeinflussungsschaltung ausgeführt.

Ferner weist das Verfahren einen Messschritt auf, bei dem eine über dem Stromregler abfallende Spannung ermittelt wird. Diese im Messschritt ermittelte, also z.B. gemessene, Spannung wird dann in einem Steuerschritt minimiert. Zum Minimieren wird das Beeinflussungsmaß im Steuerschritt derartig eingestellt, dass der in der Regelschaltung ermittelte Istwert durch die Beeinflussungsschaltung manipuliert oder beeinflusst wird. Dieser manipulierte Istwert führt dann dazu, dass die Regelschaltung das steuerbare Lademittel derart steuert, dass eine Kondensatorspannung eingestellt wird, wodurch wiederum die gemessene Spannung minimiert wird.

Überdies wird im Leistungsfaktorkorrekturschritt der Istwert über einen Messzweig ermittelt. Dieser Messzweig ist zwischen einem Messeingang der Regelschaltung und einem Potential des Kondensators verbunden. Der Messzweig weist ein oder mehrere in Reihe und/oder parallel geschaltete Widerstände auf.

Durch den Messzweig ist es vorteilhafterweise möglich, eine handelsübliche Regelschaltung in der Leistungsfaktorkorrekturschaltung einzusetzen, die einen vom Hersteller unveränderbaren vorprogrammierten oder festgelegten Sollwert aufweist. Der Bereich eines zu ermittelnden Istwerts kann dann durch Auslegung des Messzweigs an einen festgelegten Sollwert angepasst werden, ohne dass eine spezifische Regelschaltung nötig ist.

Erfindungsgemäß wird der ermittelte Istwert im Beeinflussungsschritt beeinflusst. Zur Beeinflussung wird eine Beeinflussungsschaltung zwischen einem Knoten des Messzweigs und einem Bezugspotential der Treiberschaltung geschaltet. Die Beeinflussungsschaltung weist einen Schalter auf. Durch Schalten des Schalters wird die Stromstärke des Stroms durch den Schalter und damit zwischen dem Knoten des Messzweigs und dem Bezugspotential der Treiberschaltung variiert.

Durch den Schalter der Beeinflussungsschaltung zwischen dem Knoten des Messzweigs und dem Bezugspotential kann der Istwert, z.B. durch getaktetes Öffnen und Schließen des Schalters mit definierten Offnungs- und Verschlusszeiten, die dann dem Beeinflussungsmaß entsprechen würden, eingestellt bzw. variiert werden.

Vorteil der erfindungsgemäßen Treiberschaltung sowie des erfindungsgemäßen Verfahrens ist, dass die über dem Stromregler abfallende Spannung minimiert wird. Diese minimierte Spannung multipliziert mit dem durch den Stromregler geregelten Treiberausgangsstrom entspricht einer minimierten im Stromregler in Wärme umgesetzten Energie und damit einer minimierten Verlustleistung. Ein Minimieren des Spannungsabfalls über dem Stromregler ist somit auch ohne einen Spannungswandler möglich.

Gemäß einem Ausführungsbeispiel der Treiberschaltung ist die Leistungsfaktorkorrekturschaltung derart ausgebildet, um den Kondensator mit einem Strom zu laden. Dieser Strom zum Laden wird mit der Leistungsfaktorkorrekturschaltung aus der mit der Gleichrichtschaltung gleichgerichteten sinusförmigen Netzwechselspannung erzeugt. Zum Erzeugen des Stroms zum Laden wird von der Leistungsfaktorkorrekturschaltung ein Strom mit einem zeitlichen Verlauf aufgenommen, dessen zeitlicher Verlauf im Wesentlichen dem zeitlichen Verlauf der gleichgerichteten sinusförmigen Netzwechselspannung entspricht.

Gemäß einer weiteren vorteilhaften Weiterbildung des erfindungsgemäßen Verfahrens, wird zum Laden des Kondensators im Leistungsfaktorkorrekturschritt ein Strom aus einem aufgenommenen Strom erzeugt. Dieser aufgenommene Strom wird aus der im Gleichrichtschritt gleichgerichteten sinusförmigen Netzwechselspannung aufgenommen. Die Leistungsfaktorkorrekturschaltung nimmt den Strom in der Art auf, dass dieser den gleichen zeitlichen Verlauf aufweist, wie die gleichgerichtete sinusförmige Netzwechselspannung, also der aufgenommene Strom und die gleichgerichtete sinusförmige Netzwechselspannung in Phase verlaufen.

Gleiche zeitliche Verläufe der gleichgerichteten sinusförmigen Netzwechselspannung und des von der Leistungsfaktorkorrekturschaltung aufgenommen Stroms sind vorteilhaft, da hierdurch das allgemeine Stromnetz bzw. das allgemeine Spannungsnetz nicht mit einer Blindleistung belastet wird. Die der Treiberschaltung zugeführten sinusförmigen Netzwechselspannung verläuft somit in der gleichen Phase wie der Strom, den die Treiberschaltung zur Versorgung von LEDs aus dem Stromnetz aufnimmt.

Gemäß einer weiteren vorteilhaften Ausführungsform der Treiberschaltung weist die Treiberschaltung einen Glättungskondensator auf. Der Glättungskondensator ist dabei derart zwischen dem positiven Potential des Kondensators und einem Knoten der Beeinflussungsschaltung geschaltet, dass durch Schaltvorgänge des Schalters der Beeinflussungsschaltung hervorgerufenen Strom und/oder Spannungsspitzen geglättet werden.

Gemäß einer weiteren vorteilhaften Weiterbildung des erfindungsgemäßen Verfahrens werden die durch Schaltvorgänge des Schalters der Beeinflussungsschaltung hervorgerufenen Strom- und/oder Spannungsspitzen in einem Glättungsschritt geglättet.

Durch die Schaltvorgänge des Schalters der Beeinflussungsschaltung entstehen Strom- und/oder Spannungsspitzen in der Beeinflussungsschaltung sowie auch im Messzweig. Diese Strom- und/oder Spannungsspitzen werden auch Transienten genannt. Bei der Ermittlung des Istwerts werden diese Strom- und/oder Spannungsspitzen dem Messeingang der Regelschaltung zugeführt. Ferner können auch im allgemeinen Strom- bzw. Spannungsnetz Transienten auftreten, gegen die handelsübliche Regelschaltungen eine Schutzschaltung aufweisen. Um diese handelsübliche Regelschaltungen in der Leistungsfaktorkorrekturschaltung einsetzen zu können, müssen also die Transienten des Schalters der Beeinflussungsschaltung gefiltert werden. Würden diese Transienten nämlich nicht gefiltert werden, würde die Schutzschaltung in der Regelschaltung regelmäßig auslösen und ein Betrieb der Treiberschaltung wäre nicht möglich.

Ferner soll die Schutzschaltung der Regelschaltung jedoch ein Zerstören der Treiberschaltung und/oder auch der an die Treiberschaltung angeschlossenen LEDs im Falle von im allgemeinen Stromnetz auftretenden Transienten schützen. Daher ist es vorteilhaft eine Glättung der Transienten gegenüber dem positiven Potential des Kondensators vorzunehmen. Durch eine derartige Glättung wird bei auftretenden Transienten im allgemeinen Strom- bzw. Spannungsnetz die Schutzschaltung der Regelschaltung auslösen, wobei die durch die Schaltvorgänge der Beeinflussungsschaltung auftretenden Transienten gefiltert werden.

Gemäß einer weiteren vorteilhaften Ausführungsform ist das Messmittel in der Treiberschaltung ein Analog-Digital-Wandler eines Mikrocontrollers. Ferner ist das Steuermittel zum Einstellen des Beeinflussungsmaßes ein Generator eines Mikrocontrollers zum Erzeugen eines pulsweitenmodulierten Ausgangssignals. Der Mikrocontroller ist z.B. derart ausgebildet, um das Tastverhältnis des pulsweitenmodulierten Ausgangssignals abhängig von der gemessenen Spannung über dem Stromregler zu erzeugen. Das Tastverhältnis entspricht dann dem Beeinflussungsmaß. Es ist z.B. denkbar, dass eine Tabelle oder ein Computerprogramm im Mikrocontroller oder im Generator des Mikrocontrollers gespeichert ist. Diese Tabelle oder dieses Computerprogramm würde dann jedem gemessenen Spannungswert ein definiertes Tastverhältnis zuweisen. Entsprechend der gemessenen Spannung würde dann das pulsweitenmodulierte Ausgangssignal mit dem entsprechend zugewiesenen Tastverhältnis ausgegeben werden. Ferner ist es z.B. möglich, den Schalter der Beeinflussungsschaltung mit diesem pulsweitenmodulierten Ausgangssignal abhängig vom Tastverhältnis des pulsweitenmodulierten Ausgangssignals zu schalten.

Auch in einer weiteren vorteilhaften Weiterbildung des erfindungsgemäßen Verfahrens wird der Messschritt mit einem Analog-Digital-Wandler eines Mikrocontrollers ausgeführt. Der Steuerschritt wird ebenfalls mit einem Mikrocontroller ausgeführt, indem ein Generator des Mikrocontrollers ein pulsweitenmoduliertes Ausgangssignal erzeugt. Das Tastverhältnis des pulsweitenmodulierten Ausgangssignals wird im Mikrocontroller oder im Generator des Mikrocontrollers abhängig von der mit dem Analog-Digital-Wandler gemessenen Spannung festgelegt und entspricht dem Beeinflussungsmaß.

Ein Messen der Spannung über dem Stromregler sowie ein Erzeugen eines pulsweitenmodulierten Ausgangssignals mit einem Mikrocontroller ist vorteilhaft, da eine intelligente Steuerung, z.B. durch ein Computerprogramm oder durch eine Tabelle, zum Erzeugen eines idealen Tastverhältnisses des pulsweitenmodulierten Ausgangssignals in Abhängigkeit der gemessenen Spannung möglich ist. Im Mikrocontroller könnte z.B. in jedem Zeitpunkt eine gemessene Spannung direkt in ein Tastverhältnis umgesetzt werden. Ferner ist es aber auch möglich einen Spannungsverlauf über einen bestimmten Zeitraum zu messen und daraus ein Tastverhältnis zu ermitteln. Auch könnte eine beliebige Frequenz festgelegt werden, mit der ein Tastverhältnis an eine gemessene Spannung angepasst wird. Das Beeinflussungsmaß kann somit in für den Einsatz der Treiberschaltung idealer Weise abhängig vom Spannungsverlauf über dem Stromregler erzeugt werden.

Gemäß einer weiteren vorteilhaften Ausführungsform ist der Stromregler einstellbar. Mit einem einstellbaren Stromregler kann die geregelte Treiberausgangsstromstärke eingestellt werden. Ferner weist die Treiberschaltung einen Dimmeingang auf. Mit dem Dimmeingang wird die Einstellung des Spannungsreglers variiert. Es ist vorstellbar, dass der Dimmeingang z.B. einen direkten Einfluss auf die Beschaltung eines Regeleingangs des Stromreglers hat, der dann durch den Dimmeingang manipuliert wird. Es ist auch vorstellbar, dass der Dimmeingang mit einem Mikrocontroller verbunden ist und der Mikrocontroller die Einstellung des Stromreglers, z.B. durch Manipulieren oder Beeinflussen des Regeleingangs, vornimmt.

Gemäß einer weiteren vorteilhaften Weiterbildung des erfindungsgemäßen Verfahrens weist der Stromregelschritt einen Einstellschritt auf. Bei dem Einstellschritt wird die mit dem Stromregler geregelte Treiberausgangsstromstärke eingestellt. Ferner wird in einem Dimmschritt die Einstellung des Stromreglers mit einem Dimmeingang der Treiberschaltung variiert. D.h. mit dem Dimmschritt werden der Treiberschaltung ein oder mehrere Signale mit einem Dimmeingang zugeführt, die dann im Einstellschritt den Stromregler auf eine durch die Signale festgelegte, zu regelnde Treiberausgangsstromstärke einstellen.

Ein einstellbarer Stromregler sowie ein Dimmeingang sind vorteilhaft, da hiermit der Arbeitspunkt, in dem an die Treiberschaltung angeschlossene LEDs betrieben werden, variiert werden kann und somit die Lichtstärke der LEDs variiert bzw. eingestellt werden kann.

Weiterer Vorteil der erfindungsgemäßen Treiberschaltung im Zusammenhang mit einem einstellbaren Stromregler ist, dass eine durch Einstellen des Stromreglers erhöhte, über dem Stromregler abfallende Spannung mit der Leistungsfaktorkorrekturschaltung und der Beeinflussungsschaltung minimiert wird.

Ferner umfasst die Erfindung ein Leuchtmittel mit einer Treiberschaltung und mindestens einer LED, wobei die Treiberschaltung einem Ausführungsbeispiel der erfindungsgemäßen Treiberschaltung entspricht. Die mindestens eine LED ist mit einem Treiberausgang der Treiberschaltung elektrisch verbunden und wird über den Treiberausgang mit einer Treiberausgangsstromstärke versorgt bzw. betrieben.

Vorteil eines derartigen Leuchtmittel ist, dass dieses im Vergleich zu bekannten Leuchtmitteln das allgemeine Strom- bzw. Spannungsnetz nicht mit einer Blindleistung belastet und gleichzeitig eine geringe Verlustleistung erzeugt, während ein im Wesentlichen konstanter Arbeitspunkt beim Betrieb mit einer sinusförmigen Netzwechselspannung möglich ist.

Weitere bevorzugte Ausführungsformen ergeben sich aus den Unteransprüchen sowie aus den anhand der Zeichnung näher erläuterten Ausführungsbeispielen. In der Zeichnung zeigen:
- Fig. 1: ein Schaltbild der erfindungsgemäßen Treiberschaltung mit vorteilhafter Weiterbildung zur elektrischen Versorgung von LEDs und
- Fig. 2: den Ablauf des erfindungsgemäßen Verfahrens mit vorteilhafter Weiterbildung.

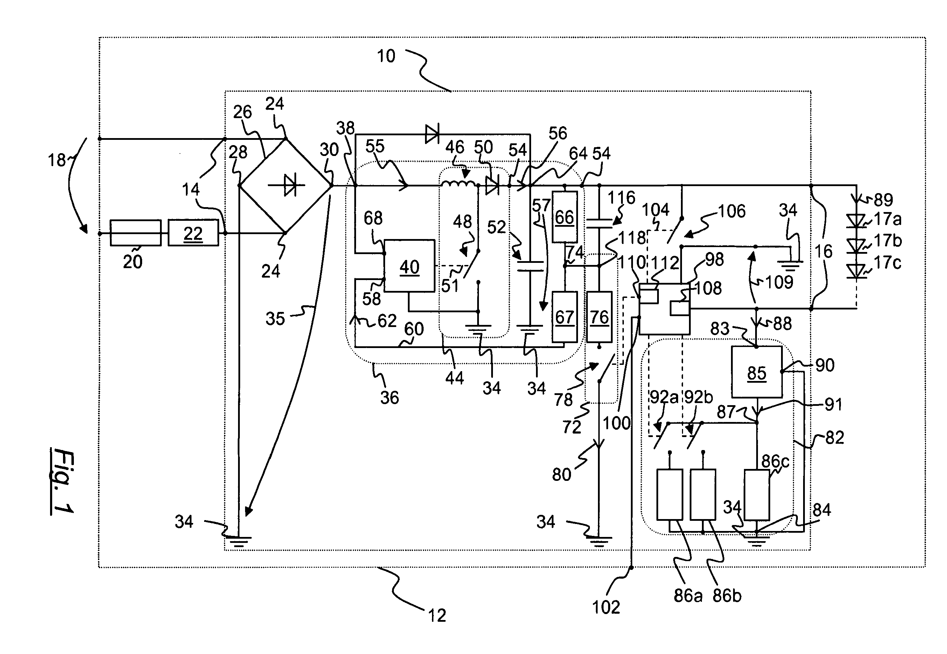

Fig. 1 zeigt eine vorteilhafte Ausführungsform der erfindungsgemäßen Treiberschaltung 10 in einer vorteilhaften Ausführungsform des erfindungsgemäßen Leuchtmittels 12. Die Treiberschaltung 10 weist einen Treibereingang 14 sowie einen Treiberausgang 16 auf. Am Treiberausgang 16 sind LEDs 17a bis 17c angeschlossen bzw. verbunden. Am Treibereingang 14 wird der Treiberschaltung 10 eine sinusförmige Netzwechselspannung 18 des allgemeinen Stromnetzes bzw. Spannungsnetzes zugeführt. Die sinusförmige Netzwechselspannung 18 wird in der Treiberschaltung 10 über eine Überlastsicherung 20 und einen Widerstand 22 einem Eingang 24 einer Gleichrichtschaltung 26 zugeführt.

Die Überlastsicherung 20 wird eingesetzt, um bei einem Defekt der Treiberschaltung 10 eine zu große Leistungsaufnahme der Treiberschaltung 10 zu verhindern. Mit dem Widerstand 22 werden Überspannungsspitzen durch elektromagnetische Einkopplungen reduziert. Dieser Widerstand 22 ist in der Regel niederohmig.

Die Gleichrichtschaltung 26 weist neben dem Eingang 24 der Gleichrichtschaltung 26 zwei Anschlüsse bzw. Kontakte 28, 30 auf. Diese Anschlüsse bzw. Kontakte 28, 30 bilden den Ausgang der Gleichrichtschaltung 26. Der Anschluss bzw. Kontakt 28 der Gleichrichtschaltung 26 ist mit einem Bezugspotential 34 der Treiberschaltung, das z.B. ein Massepotential wie etwa das Erdpotential ist, verbunden. Am Ausgang 28, 30 der Gleichrichtschaltung 26 wird eine gleichgerichtete sinusförmige Netzwechselspannung 35 mit der Gleichrichtschaltung 26 aus der sinusförmigen Netzwechselspannung 18 erzeugt.

Ferner weist die Treiberschaltung 10 eine Leistungsfaktorkorrekturschaltung 36 auf. Die Leistungsfaktorkorrekturschaltung 36 wird mit der gleichgerichteten sinusförmigen Netzwechselspannung 35 versorgt, indem der Anschluss 30 der Gleichrichtschaltung 26 mit einem Eingang 38 der Leistungsfaktorkorrekturschaltung 36 verbunden ist. Die Leistungsfaktorkorrekturschaltung 36 weist eine Regelschaltung 40 auf. Ferner weist die Leistungsfaktorkorrekturschaltung 36 ein steuerbares Lademittel 44 auf. Das steuerbare Lademittel 44 weist eine Induktivität bzw. Spule 46 sowie einen Schalter 48 auf. Zudem weist das Lademittel 44 eine Diode 50 auf. Die Spule 46 und der Schalter 48 sind in Reihe geschaltet, wobei diese Reihenschaltung zwischen dem Eingang 38 der Leistungsfaktorkorrekturschaltung 36 und dem Bezugspotential 34 der Treiberschaltung 10 verbunden ist. Der Schalter 48 kann durch eine Steuerung 51 von der Regelschaltung 40 geschaltet werden. Der Schalter 48 ist hier mit dem Schaltsymbol eines Schalters dargestellt, wobei der Schalter 48 auch aus einem oder mehreren Transistoren bestehen kann.

Ferner weist die Leistungsfaktorkorrekturschaltung 36 eine Kapazität bzw. einen Kondensator 52 auf. Dieser Kondensator 52 ist ausgangsseitig des Lademittels 44 zwischen einem Ausgang 54 des Lademittels und dem Bezugspotential 34 der Treiberschaltung 10 geschaltet. Betrachtet man die Kapazität 52 und die Diode 50 des Lademittels 44 als eine Reihenschaltung, so ist diese Reihenschaltung parallel zum Schalter 48 angeordnet.

Wird der Schalter 48 geschlossen, so fließt ein Strom 55 in die Spule 46 und erzeugt in der Spule 46 ein magnetisches Feld. Wird danach der Schalter 48 wieder geöffnet, so wird bedingt durch das in der Spule 46 erzeugte magnetische Feld ein Strom 56 erzeugt, der durch die Diode 50 fließt und den Kondensator bzw. die Kapazität 52 lädt.

Durch Takten oder Ansteuern des Lademittels 44 mit der Steuerung 51 von der Regelschaltung 40 kann eine im Wesentliche konstante Kondensatorspannung 57 über dem Kondensator 52 erzeugt werden. Um die Taktrate bzw. die Frequenz für diese Schaltung des Schalters 48 ermitteln zu können, wird mit einem Messeingang 58 der Regelschaltung 40 ein Istwert bestimmt. Dieser Istwert wird über einen Messzweig 60 aus der Kondensatorspannung 57 über dem Kondensator 52 bestimmt. Der Istwert entspricht hier der Stromstärke eines Stroms 62, der mit dem Messeingang 58 der Regelschaltung 40 gemessen und mit einem in der Regelschaltung 40 gespeicherten Sollwert verglichen wird. Der Strom 62 wird durch die Spannung über dem Kondensator 57 erzeugt, die zu einem Stromfluss vom positiven Potential 64 des Kondensators 52 durch die Widerstände 66, 67 in den Messeingang 58 führt. Die Regelschaltung 40 ist dazu mit dem Bezugspotential 34 der Treiberschaltung 10 verbunden.

Ferner wird der zeitliche Verlauf der gleichgerichteten sinusförmigen Netzwechselspannung 35 mit einem weiteren Messeingang 68 der Leistungsfaktorkorrekturschaltung 36 ermittelt. Mit Kenntnis dieses zeitlichen Verlaufs wird der Schalter 48 von der Regelschaltung 40 derart angesteuert, dass ein Strom 55 von der Leistungsfaktorkorrekturschaltung 36 aufgenommen wird, der den gleichen zeitlichen Verlauf wie die gleichgerichtete sinusförmige Netzwechselspannung 35 aufweist. Die gleichgerichtete sinusförmige Netzwechselspannung 35 und der Strom 55 verlaufen also zeitlich mit gleicher Phase und haben somit den gleichen zeitlichen Verlauf.

Der weitere Messeingang 68 ist hier direkt mit dem Eingang 38 der Leistungsfaktorkorrekturschaltung 36 verbunden, wobei auch hier ein weiterer Messzweig möglich wäre. Dieser Messzweig könnte etwa den gleichen Aufbau wie der Messzweig 60 aufweisen und zwischen dem weiteren Messeingang 68 und dem Eingang 38 der Leistungsfaktorkorrekturschaltung 30 verbunden sein.

Ferner weist die Treiberschaltung 10 eine Beeinflussungsschaltung 72 auf. Die Beeinflussungsschaltung 72 ist zwischen einem Knoten bzw. Potential 74 des Messzweigs 60 und dem Bezugspotential 34 der Treiberschaltung geschaltet. Die Beeinflussungsschaltung 72 besteht hier aus einer Reihenschaltung mit einem Widerstand 76 und einem Schalter 78. Durch Schließen des Schalters 78 fließt ein Strom 80 aus dem Messzweig in Richtung des Bezugspotentials 34. Abhängig von der Stromstärke des Stroms 80 wird die Stromstärke des in den Messeingang 58 der Regelschaltung 40 fließenden Stroms 62 und damit der ermittelte Istwert beeinflusst. Durch z.B. Variieren des Tastverhältnisses des Schalters, also des Puls-Pausen-Verhältnisses, mit dem der Schalter 78 geöffnet und geschlossen wird, wird der ermittelte Istwert unterschiedlich stark beeinflusst. Vorteilhafterweise wird dieses Tastverhältnis als Beeinflussungsmaß verwendet.

Außerdem weist die Treiberschaltung 10 einen Stromregler 82 auf. Der Stromregler 82 weist einen Eingang 83 und einen Ausgang 84 auf. Der Stromregler 82 ist mit einem Spannungsregler 85 und mehreren Widerständen 86a bis 86c gebildet. Der Spannungsregler 85 weist einen Spannungsausgang 87 auf. Die Widerstände 86a bis 86c sind abhängig von den Schaltzuständen der Schaltern 92a, 92b parallel zwischen den Spannungsausgang 87 des Spannungsregler 85 und dem Bezugspotential 34 geschaltet. Ferner weist der Stromregler 82 einen Regeleingang 90 auf, der ebenfalls mit dem Bezugspotential 34 der Treiberschaltung 10 verbunden ist.

Die Stromregelung wird vom Stromregler 82 ausgeführt, indem die Spannung über den Widerständen 86a bis 86c mit dem Regeleingang 90 gemessen wird. Diese Spannung wird vom Regler auf einen konstanten Wert geregelt, wodurch ein Strom 88, der in den Regler fließt geregelt wird. Dieser Strom 88 entspricht der Summe der Ströme, die durch die Widerstände 86a bis 86c aufgrund der geregelten Spannung über den Widerständen 86a bis 86c fließen. Der Strom 88 ist also abhängig von den Schaltzuständen der Schaltern 92a, 92b. Der Strom 88 entspricht im Wesentlichen einem Treiberausgangsstrom 89 bzw. einem Spannungsreglerausgangsstrom 91, der aus dem Spannungsausgang 87 des Spannungsreglers 85 zu dem oder den Widerständen 86a bis 86c fließt. Durch Einstellen und Regeln des Stroms 88 wird also mit dem Stromregler 82 eine Treiberausgangsstromstärke eines Treiberausgangsstroms 89 erzeugt.

Hier sind nur ein Spannungsregler 85 sowie drei Widerstände 86a bis 86c mit zwei Schaltern 92a, 92b dargestellt. Es ist jedoch auch möglich, mehrere Spannungsregler 85 und/oder noch mehr Widerstände 86a bis 86c mit Schaltern 92a, 92b in der Treiberschaltung 10 vorzusehen, um z.B. eine größere Stromstärke zu regeln und eine genauere Einstellung des zu regelnden Stroms zu erreichen.

Ferner weist die Treiberschaltung einen Mikrocontroller 98 auf. Die Schalter 92a, 92b werden mit dem Mikrocontroller 98 angesteuert. Der Mikrocontroller 98 weist zur Steuerung der Schalter 92a, 92b einen Eingang 100 auf, der mit einem Dimmeingang 102 der Treiberschaltung 10 verbunden ist. Mit dem Dimmeingang 102 können die Einstellungen des Stromreglers 82, also der geregelte Strom 88, variiert werden. Dazu wird dem Dimmeingang 102 z.B. ein Signal eingegeben, das im Mikrocontroller 98 in ein Steuersignal umgesetzt wird und einen oder mehrere Schalter 92a, 92b schließt und/oder öffnet. Durch das Öffnen und/oder Schließen der Schalter 92a, 92b ändert sich, wie oben beschrieben, der geregelte Strom 88 bzw. Treiberausgangsstrom 89.

Außerdem weist der Mikrocontroller 98 eine Steuerung 104 auf, mit der ein Schalter 106 geöffnet oder geschlossen werden kann. Dieser Schalter 106 stellt einen Schutzmechanismus dar, da die gespeicherte Energie auf der Kapazität 52 ohne diesen Schutzmechanismus, z.B. bei einem Defekt, gespeichert werden könnte und dann daraus Verletzungen entstehen könnten, wenn die Treiberschaltung 10 aus ihrem Schutzgehäuse entnommen werden würde. Vorteilhafterweise ist dieser Schalter 106 daher solange geschlossen, bis die Treiberschaltung 10 und damit auch der Mikrocontroller 98 mit der sinusförmigen Netzwechselspannung 18 versorgt wird. Ist die Versorgung gewährleistet, so wird der Schalter 106 durch den Mikrocontroller 98 geöffnet und eine Speicherung von Energie auf dem Kondensator bzw. der Kapazität 52 wird ermöglicht. Wird hingegen die sinusförmigen Netzwechselspannung 18 abgeschaltet, so werden die Potentiale der Kapazität 52 durch den Schalter 106 automatisch verbunden und damit die Kondensatorspannung 57 reduziert.

Ferner weist der Mikrocontroller 98 ein Messmittel 108 auf, mit dem eine Spannung 109 über dem Eingang 83 des Stromreglers 82 und dem Bezugspotential 34 der Treiberschaltung 10 gemessen wird. Das Messmittel 108 ist z.B. ein Analog-Digital-Wandler.

Zudem weist der Mikrocontroller 98 einen Ausgang 110 auf. Der Ausgang 110 gibt ein pulsweitenmoduliertes Ausgangssignal aus, das durch ein Steuermittel 112, z.B. einem Generator zum Erzeugen eines pulsweitenmodulierten Ausgangssignals, im Mikrocontroller 98 erzeugt wird. Das Tastverhältnis dieses pulsweitenmodulierten Ausgangssignals wird in Abhängigkeit von der gemessenen Spannung 109 über dem Stromregler 82 erzeugt und entspricht hier dem Beeinflussungsmaß.

Tritt eine verhältnismäßig hohe Spannung 109 auf, so wird der Schalter 78 verhältnismäßig seltener geschlossen als bei einer verhältnismäßig geringen Spannung 109. Durch ein selteneres Schließen fließt ein höherer Strom 62 in den Messeingang 58 der Regelschaltung 40. Die Regelschaltung 40 steuert daher das Lademittel 44 derartig, dass die Kapazität 52 auf eine geringere Kondensatorspannung 57 geladen wird. Durch diese Regelung entsteht eine Kondensatorspannung 57 die bei angeschlossenen LEDs 17a bis 17c am Treiberausgang im Wesentlichen komplett über dem Treiberausgang 16 abfällt, wodurch die Spannung 109 über dem Stromregler 82 minimiert wird.

Ferner weist die Treiberschaltung 10 eine Glättungskapazität 116 auf, die zwischen dem positiven Potential 64 des Kondensators 52 und einem Potential bzw. Knoten 118 der Beeinflussungsschaltung 72 geschaltet ist. Diese Glättungskapazität 116 wird eingesetzt, um handelsübliche digitale Regelschaltungen, z.B. PFC-Schaltungen, einsetzen zu können. Diese handelsüblichen digitalen Regelschaltungen weisen nämlich meist eine spezielle Schutzschaltung zum Schutz vor Spannungs- und/oder Stromspitzen, die auch Transienten genannt werden, der sinusförmigen Netzwechselspannung 18 auf. Derartige Transienten, die in den Messzweig 60 einkoppeln, lösen die Schutzschaltung aus, wenn sich der ermittelte Istwert durch diese Transienten am Messeineingang 58 sprunghaft ändert. Im Gegensatz zu den Transienten der sinusförmigen Netzwechselspannung 18 sollen die Transienten, die durch die Schaltvorgänge des Schalters 78 hervorgerufen werden jedoch nicht zu einem Auslösen der Schutzschaltung führen. Durch Glätten gegenüber dem positiven Potential 64 des Kondensators 52 wird daher erreicht, dass zwar die durch die Schaltvorgänge des Schalters 78 hervorgerufen Transienten geglättet werden, wogegen Transienten der sinusförmigen Netzwechselspannung 18 weiterhin in den Messzweig 60 eingekoppelt werden.

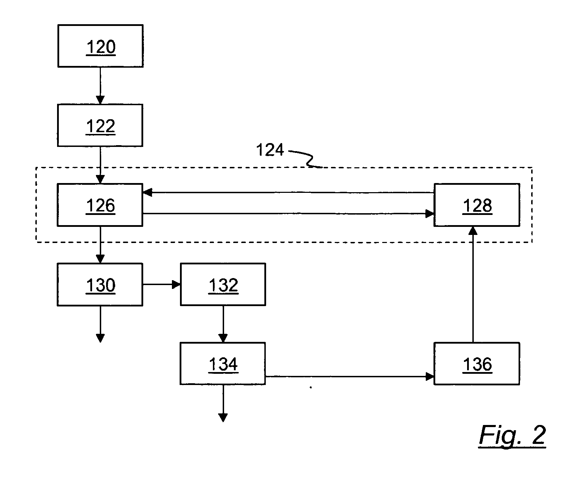

Fig. 2 zeigt den skizzierten Ablauf eines Ausführungsbeispiels des erfindungsgemäßen Verfahrens. Durch die Pfeile ist den Schritten zwar optisch eine bestimmte Reihenfolge zugeordnet, wobei beim vorliegenden Verfahren keine direkte Reihenfolge der Schritte durch diese Pfeile gemeint ist. Bei dem vorliegenden Verfahren werden die Schritte vielmehr Weitestgehend gleichzeitig und andauernd ausgeführt.

In einem Zuführschritt 120 wird der Treiberschaltung 10 eine sinusförmige Netzwechselspannung 18 zugeführt. In einem Gleichrichtschritt 122 wird die im Zuführschritt 120 zugeführte sinusförmige Netzwechselspannung 18 in eine gleichgerichtete sinusförmige Netzwechselspannung 35 gleichgerichtet.

Ferner wird eine Leistungsfaktorkorrekturschritt 124 ausgeführt. Der Leistungsfaktorkorrekturschritt 124 weist einen Ladeschritt 126 sowie einen Regelschritt 128 auf. Im Ladeschritt 126 wird ein Kondensator 52 mit der im Gleichrichtschritt 122 gleichgerichteten sinusförmigen Netzwechselspannung geladen, wobei diese Ladung abhängig von einem im Regelschritt 128 aus der Kondensatorspannung 57 ermittelten Istwert ist.

In einem Stromregelschritt 130 wird mit einem Stromregler 82 aus der Kondensatorspannung 57 ein konstanter Strom 88 zur Versorgung mindestens einer LED 17a bis 17c erzeugt. Eine Spannung 109, die im Regelschritt über dem Stromregler 82 abfällt, wird in einem Messschritt 132 gemessen. Das Ergebnis der Messung im Messschritt 132 wird in einem Steuerschritt 134 in ein Beeinflussungsmaß überführt.

Mit dem Beeinflussungsmaß wird ein Beeinflussungsschritt 136 ausgeführt. Der Beeinflussungsschritt 136 beeinflusst den im Regelschritt 128 ermittelten Istwert, der aus der Kondensatorspannung 57 des Kondensators 52 ermittelt wird. Im Regelschritt 128 wird dann abhängig von diesem beeinflussten ermittelten Istwert der Ladeschritt 126 derart gesteuert, dass die Spannung 109, die über dem Stromregler 82 abfällt, minimiert wird.

Alle in der vorstehenden Beschreibung und in den Ansprüchen genannten Merkmale sind sowohl einzeln als auch in beliebiger Kombination miteinander einsetzbar. Die Offenbarung der Erfindung ist daher nicht auf die beschriebene bzw. beanspruchte Merkmalskombination beschränkt. Vielmehr sind alle Merkmalskombinationen als offenbart zu betrachten.

## Patentansprüche

1. Treiberschaltung zur Versorgung mindestens einer LED (17a bis 17c) mit folgenden Merkmalen:
a) einem Treibereingang (14) zum Zuführen einer sinusförmigen Netzwechselspannung (18),
b) einer Gleichrichtschaltung (26) zum Gleichrichten der mit dem Treibereingang (14) zugeführten sinusförmigen Netzwechselspannung (18),
c) einer Leistungsfaktorkorrekturschaltung (36) mit einem Kondensator (52) und mit einem steuerbaren Lademittel (44) zum Laden des Kondensators (52) mit der in der Gleichrichtschaltung (26) gleichgerichteten sinusförmigen Netzwechselspannung (35) auf eine von einer Steuerung (51) des Lademittels (44) abhängige Kondensatorspannung (57) und mit einer Regelschaltung (40) zum Ermitteln eines Istwerts aus der Kondensatorspannung (57) und zum Regeln des ermittelten Istwerts auf einen Sollwert durch Steuern des Lademittels (44), wobei
d) die Leistungsfaktorkorrekturschaltung (36) zum Ermitteln des Istwerts einen zwischen dem positiven Potential (64) des Kondensators (52) und einem Messeingang (58) der Regelschaltung (40) geschalteten Messzweig (60) mit einem oder mehreren in Reihe und/oder parallel geschalteten Widerständen (66, 67) aufweist,
e) mindestens einem Stromregler (82) zum Erzeugen einer geregelten Treiberausgangsstromstärke eines Treiberausgangsstroms (89) aus der Kondensatorspannung (57) des Kondensators (52) zur Versorgung der LED (17a bis 17c),
f) eine Beeinflussungsschaltung (72) zum von einem Beeinflussungsmaß abhängigen Beeinflussen des ermittelten Istwerts,
g) ein Messmittel (108) zum Ermitteln einer über dem Stromregler (82) abfallenden Spannung (109),
h) ein Steuermittel (112) zum derartigen Einstellen des Beeinflussungsmaßes, dass die mit dem Messmittel (108) ermittelte Spannung (109) minimiert wird,
**gekennzeichnet durch** folgende weitere Merkmale:
i) die Beeinflussungsschaltung (72) zwischen einem Knoten (74) des Messzweigs (60) und einem Bezugspotential (34) der Treiberschaltung (10) geschaltet ist und zum Beeinflussen des ermittelten Istwerts einen Schalter (78) zum Variieren der Stromstärke eines Stroms (80) zwischen dem Knoten (74) des Messzweigs (60) und dem Bezugspotential (34) aufweist.

2. Vorrichtung nach Anspruch 1,
**dadurch gekennzeichnet, dass**
die Leistungsfaktorkorrekturschaltung (36) derart ausgebildet ist, um zum Laden des Kondensators (52) einen Strom (55) mit einem zeitlichen Verlauf aufzunehmen, der im Wesentlichen den gleichen zeitlichen Verlauf wie die gleichgerichtete sinusförmigen Netzwechselspannung (30) aufweist.

3. Vorrichtung nach Anspruch 1 oder 2,
**dadurch gekennzeichnet, dass**
die Treiberschaltung (10) zum Glätten der durch Schaltvorgänge des Schalters (78) der Beeinflussungsschaltung (72) hervorgerufene Strom- und/oder Spannungsspitzen einen zwischen dem positiven Potential (64) des Kondensators (52) und einem Knoten (118) der Beeinflussungsschaltung (72) geschalteten Glättungskondensator (116) aufweist.

4. Vorrichtung nach einem der vorherigen Ansprüchen,
**dadurch gekennzeichnet, dass**
das Messmittel (108) einem Analog-Digital-Wandler und das Steuermittel (112) einem Generator zum Erzeugen eines pulsweitenmodulierten Ausgangssignals eines Mikrocontrollers (98) entsprechen und der Mikrocontroller (98) derart ausgebildet ist, um ein dem Beeinflussungsmaß entsprechendes Tastverhältnis des pulsweitenmodulierten Ausgangssignals abhängig von der mit dem Analog-Digital-Wandler gemessenen Spannung (109) zu erzeugen.

5. Vorrichtung nach einem der vorherigen Ansprüche,
**dadurch gekennzeichnet, dass**
der Stromregler (82) ein einstellbarer Stromregler (82) zum Einstellen der von dem Stromregler (82) erzeugten geregelten Treiberausgangstromstärke des Treiberausgangsstroms (89) ist und die Treiberschaltung einen Dimmeingang (102) zum Variieren der Einstellung des Stromreglers (82) aufweist.

6. Verfahren zum Versorgen mindestens einer LED (17a bis 17c) mit einer Treiberschaltung (10) mit folgenden Schritten:
a) einem Zuführschritt (120), bei dem der Treiberschaltung (10) mit einem Treibereingang (14) eine sinusförmige Netzwechselspannung (18) zugeführt wird,
b) einem Gleichrichtschritt (122), bei dem die im Zuführschritt (120) zugeführte sinusförmige Netzwechselspannung (18) gleichgerichtet wird,
c) einem Leistungsfaktorkorrekturschritt (124), bei dem mit einem steuerbaren Lademittel (44) ein Kondensator (52) mit der im Gleichrichtschritt (120) gleichgerichteten sinusförmigen Netzwechselspannung (35) auf eine von einer Steuerung (51) des Lademittels (44) abhängige Kondensatorspannung (57) geladen wird und bei dem mit einer Regelschaltung (40) ein Istwert aus der Kondensatorspannung (57) ermittelt wird und der ermittelte Istwert auf einen Sollwert durch Steuern des Lademittels (44) geregelt wird, wobei im Leistungsfaktorkorrekturschritt (124) der Istwert mit einem zwischen dem positiven Potential (64) des Kondensators (52) und einem Messeingang (58) der Regelschaltung (40) geschalteten Messzweig (60) ermittelt wird, wobei der Messzweig (60) einen oder mehrere in Reihe und/oder parallel geschalteten Widerstände (66, 67) aufweist,
d) einem Stromregelschritt (130), bei dem mit mindestens einem Stromregler (82) eine geregelte Treiberausgangsstromstärke eines Treiberausgangsstroms (89) aus der Kondensatorspannung (57) des Kondensators (52) zur Versorgung der LED (17a bis 17c) erzeugt wird,
e) einen Beeinflussungsschritt (136), bei dem mit einer Beeinflussungsschaltung (72) der ermittelte Istwert abhängig von einem Beeinflussungsmaß beeinflusst wird,
f) einen Messschritt (132), bei dem eine über dem Stromregler (82) abfallende Spannung (109) ermittelt wird,
g) einen Steuerschritt (134), bei dem das Beeinflussungsmaß derartig eingestellt wird, dass die in dem Messschritt (132) ermittelte Spannung (109) minimiert wird,
**dadurch gekennzeichnet, dass**
h) beim Beeinflussungsschritt (136) mit einem zwischen einem Knoten (74) des Messzweigs (60) und einem Bezugspotential (34) der Treiberschaltung (10) geschalteten Schalter (78) der Beeinflussungsschaltung (72) der ermittelte Istwert beeinflusst wird, indem die Stromstärke eines Stroms (80) zwischen dem Knoten des Messzweigs (74) und dem Bezugspotential (34) mit dem Schalter (78) variiert wird.

7. Verfahren nach Anspruch 6,
**dadurch gekennzeichnet, dass**
im Leistungsfaktorkorrekturschritt (124) zum Laden der Kapazität ein Strom (55) mit einem zeitlichen Verlauf von der Leistungsfaktorkorrekturschaltung (36) aufgenommen wird, der im Wesentlichen den gleichen zeitlichen Verlauf wie die gleichgerichtete sinusförmigen Netzwechselspannung (35) aufweist.

8. Verfahren nach Anspruch 6 oder 7,
**gekennzeichnet durch**,
einen Glättungsschritt, bei dem **durch** Schaltvorgänge des Schalters (78) in der Beeinflussungsschaltung (72) hervorgerufene Strom- und/oder Spannungsspitzen mit einem zwischen dem positiven Potential (64) des Kondensators (52) und einem Knoten (118) des Manipulationszweigs (72) geschalteten Glättungskondensator (116) geglättet werden.

9. Verfahren nach einem der Ansprüche 6 bis 8,
**dadurch gekennzeichnet, dass**
der Messschritt (132) mit einem Analog-Digital-Wandler und der Steuerschritt (134) mit einem Generator zum Erzeugen eines pulsweitenmodulierten Ausgangssignals eines Mikrocontrollers (98) ausgeführt werden und der Mikrocontroller (98) ein dem Beeinflussungsmaß entsprechendes Tastverhältnis des pulsweitenmodulierten Ausgangssignals abhängig von der mit dem Analog-Digital-Wandler gemessenen Spannung (109) erzeugt.

10. Verfahren nach einem der Ansprüche 6 bis 9,
**dadurch gekennzeichnet, dass**
der Stromregelschritt (130) einen Einstellschritt aufweist, bei dem die mit dem Stromregler (82) erzeugte geregelte Treiberausgangsstromstärke des Treiberausgangsstroms (89) eingestellt wird, und die Einstellung des Stromreglers (82) in einem Dimmschritt mit einem Dimmeingang (102) der Treiberschaltung (10) variiert wird.

11. Leuchtmittel (12) mit mindestens einer LED (17a bis 17c),
**dadurch gekennzeichnet, dass**,
das Leuchtmittel (12) eine Treiberschaltung (10) nach einem der Ansprüche 1 bis 5 aufweist und derart ausgebildet ist, um die mindestens eine LED (17a bis 17c) mit der Treiberschaltung (10) zu versorgen.

## Claims

1. A driver circuit for supplying at least one LED (17a to 17c) with the following features:
a) a driver input (14) for supplying a sinusoidal mains alternating voltage (18),
b) a rectifier circuit (26) for rectifying the sinusoidal mains alternating voltage (18) supplied with the driver input (14),
c) a power factor correction circuit (36) with a capacitor (52) and with a controllable charaging means (44) for charging the capacitor (52) with the sinusoidal mains alternating voltage (35) rectified in the rectifier circuit (26) to a capacitor voltage (57) dependent on a control (51) of the charging means (44) and with a control circuit (40) for determining an actual value from the capacitor voltage (57) and for controlling the determined actual value to a theoretical value by controlling the charging means (44), whereby
d) the power factor correction circuit (36) compraises for determining the actual value a measuring branch (60) connected between the positive potential (64) of the capacitor (52) and a measuring input (58) of the control circuit (40) and with one or more series- and/or parallel-connected resistors (66, 67),
e) at least one current regulator (82) for generating a regulated driver output current strength of a driver output current (89) from the capacitor voltage (57) of the capacitor (52) for supplying the LED (17a to 17c),
f) an influencing circuit (72) for influencing the determined actual value, which influencing is a function of an influencing measure,
g) a measuring means (108) for determining a voltage (109) dropping via the current regulator (82),
h) a control means (112) for adjusting the influencing means in such a manner that the voltage (109) determined with the measuring means (108) is minimized,
**characterized by** the following further features:
i) the influencing circuit (72) is connected between a node (74) of the measuring branch (60) and a reference potential (34) of the driver circuit (10) and comprises, for influencing the determined actual value, a switch (78) for varying the current strength of a current (80) between the node (74) of the measuring branch (60 and the reference potential (34).

2. The device according to claim 1,
**characterized in that**
the power factor correction circuit (36) is constructed in such a manner, in order to charge the condenser (52), as to receive current (55) with the course in time that has substantially the same course in time as the rectified, sinusoidal mains alternating voltage (30).

3. The device according to claim 1 or 2,
**characterized in that**
the driver circuit (10) comprises, for smoothing the current- and/or voltage peaks produced by switching processes of the switch (78) of the influencing circuit (72), a smoothing condenser (116) connected between the positive potential (64) of the capacitor (52) and between a node (118) of the influencing circuit (72).

4. The device according to one of the previous claims,
**characterized in that**
the measuring means (108) corresponds to an analog-to-digital converter and the control means (112 corresponds to a generator for generating a pulse-width-modulated output signal of a microcontroller (98) and that the microcontroller (98) is constructed in such a manner as to generate a keying ratio of the pulse-width-modulated output signal corresponding to the influencing measure as a function of the voltage (109) measured with the analog-to-digital converter.

5. The device according to one of the previous claims,
**characterized in that**
the current regulator (82) is an adjustable current regulator (82) for adjusting the regulated driver output current strength of the driver output current (89) generated by the current regulator (82) and that the driver circuit has a dimming input (102) for varying the adjustment of the current regulator (82).

6. A method for supplying at least one LED (17a to 17c) with a driver circuit (10) with the following steps:
a) a supply step (120) in which a sinusoidal mains alternating voltage (18) is supplied to the driver circuit (10) with a driver input (14),
b) a rectifying step (122) in which the sinusoidal mains alternating voltage (18) supplied in the supply step (120) is rectified,
c) a power factor correction step (124) in which a capacitor (52) is charged with a controllable charging means (44) with the sinusoidal mains alternating voltage (35) rectified in the rectifying step (120) to a capacitor voltage (57) dependent on a control (51) of the charging means (44), and in which an actual value is determined from the capacitor voltage (57) with a regulating circuit (40) and that the determined actual value is regulated to a theoretical value by controlling the charging means (44), whereby in the power factor correction step (124) the actual value is determined with a measuring branch (60) connected between the positive potential (64) of the capacitor (52) and between a measuring input (58) of the regulating circuit (40), whereby the measuring branch (60) comprises one or more resistors (66, 67 connected in series and/or in parallel,
d) a current regulating step (130) in which a regulated driver output current strength of a driver output current (89) is generated from the capacitor voltage (57) of the capacitor (52) with at least one current regulator (82) for supplying the LED (17a to 17c),
e) an influencing step (136) in which the determined actual value is influenced with an influencing circuit (72) as a function of an influencing measure,
f) a measuring step (132) in which a voltage (109) dropping via the current regulator (82) is determined,
g) a control step (134) in which the influencing measure is adjusted in such a manner that the voltage (109) determined in the measuring step (132) is minimized,
**characterized in that**
in the influencing step (136) the determined actual value is influenced by a switch (78) of the influencing circuit (72) which switch is connected between a node (74) of the measuring branch (60) and a reference potential (34) of the driver circuit (10) **in that** the current strength of a current (80) is varied between the node of the measuring branch (74) and the reference potential (34) with the switch (78).

7. The method according to claim 6,
**characterized in that**
in the power factor correction step (124) a current (55) with a course in time is taken up by the power factor correction step (36) for charging the capacitance, which current has substantially the same course in time as the rectified sinusoidal mains alternating voltage (35).

8. The method according to claim 6 or 7,
**characterized by**
a smoothing step in which current- and/or voltage peaks produced by switching processes of the switch (78) in the influencing circuit (72) are smoothed with a smoothing capacitor (116) connected between the positive potential (64) of the capacitor (52) and a node (118) of the manipulation branch (72).

9. The method according to one of claims 6 to 8,
**characterized in that**
the measuring step (132) is designed with an analog-to-digital converter and the control step (134) with a generator for generating a pulse-width-modulated output signal of a microcontroller and that the microcontroller (98) generates a keying ratio of the pulse-width-modulated output signal corresponding to the influencing measure as a function of the voltage (109) measured by the analog-to-digital converter.

10. The method according to one of claims 6 to 9,
**characterized in that**
the current regulating step (130) has an adjustment step in which the regulated driver output current strength of the driver output current, which strength is generated by the current regulator (82), is adjusted and the adjusting of the current regulator (82) is varied in a dimming step with a dimming input (102) of the driver circuit (10).

11. An illuminating means (12) with at least one LED (17a to 17c),
**characterized in that**
the illuminating means (12) has a driver circuit (10) according to one of claims 1 to 5 and is designed in such a manner as to supply the at least one LED (17a to 17c) with the driver circuit (10).

## Revendications

1. Circuit d'excitation pour l'alimentation d'au moins une DEL (17a à 17c) présentant les caractéristiques suivantes :
a) une entrée d'excitation (14) pour alimenter une tension alternative de réseau sinusoïdale (18),
b) un circuit redresseur (26) pour redresser la tension alternative de réseau sinusoïdale (18) alimentée avec l'entrée d'excitation (14),
c) un circuit de correction du facteur de puissance (36) avec un condensateur (52) et avec un moyen de chargement (44) commandable pour charger le condensateur (52) avec la tension alternative de réseau sinusoïdale redressée (35) dans le circuit redresseur (26) à une tension de condensateur (57) dépendante d'une commande (51) du moyen de chargement (44) et avec un circuit de régulation (40) pour déterminer une valeur réelle à partir de la tension de condensateur (57) et pour réguler la valeur réelle déterminée sur une valeur de consigne par la commande du moyen de chargement (44), dans lequel
d) le circuit de correction du facteur de puissance (36) présente une branche de mesure (60) pour déterminer la valeur réelle, connectée entre le potentiel positif (64) du condensateur (52) et une entrée de mesure (58) du circuit de régulation (40) avec une ou plusieurs résistances (66, 67) connectées en série et/ou en parallèle,
e) au moins un régulateur de courant (82) pour générer une intensité de courant de sortie d'excitation régulée d'un courant de sortie d'excitation (89) à partir de la tension de condensateur (57) du condensateur (52) pour alimenter la DEL (17a à 17c),
f) un circuit d'influence (72) pour influencer la valeur réelle déterminée en fonction d'une grandeur d'influence,
g) un moyen de mesure (108) pour déterminer une tension (109) chutant dans le régulateur de courant (82),
h) un moyen de commande (112) pour régler la grandeur d'influence de telle sorte que la tension (109) déterminée avec le moyen de mesure (108) est minimisée,
**caractérisé par** les autres caractéristiques suivantes :
i) le circuit d'influence (72) est connecté entre un noeud (74) de la branche de mesure (60) et un potentiel de référence (34) du circuit d'excitation (10) et, pour influencer la valeur réelle déterminée, présente un commutateur (78) pour varier l'intensité de courant d'un courant (80) entre le noeud (74) de la branche de mesure (60) et le potentiel de référence (34).

2. Dispositif selon la revendication 1,
**caractérisé en ce que**
le circuit de correction du facteur de puissance (36) est conçu de façon à absorber un courant (55) avec une variation temporelle pour charger le condensateur (52), le courant présentant essentiellement la même variation temporelle que la tension alternative de réseau sinusoïdale redressée (30).

3. Dispositif selon la revendication 1 ou 2,
**caractérisé en ce que**
le circuit d'excitation (10) présente un condensateur de lissage (116) pour lisser les pics de courant et/ou de tension causés par les processus de commutation du commutateur (78) du circuit d'influence (72), connecté entre le potentiel positif (64) du condensateur (52) et un noeud (118) du circuit d'influence (72).

4. Dispositif selon l'une des revendications précédentes,
**caractérisé en ce que**
le moyen de mesure (108) correspond à un convertisseur analogique-numérique et le moyen de commande (112) à un générateur pour générer un signal de sortie modulé en largeur d'impulsion d'un microcontrôleur (98) et le microcontrôleur (98) est conçu de façon à générer un facteur de durée d'impulsions du signal de sortie modulé en largeur d'impulsion correspondant à la grandeur d'influence en fonction de la tension (109) mesurée avec le convertisseur analogique-numérique.

5. Dispositif selon l'une des revendications précédentes,
**caractérisé en ce que**
le régulateur de courant (82) est un régulateur de courant (82) réglable pour régler l'intensité de courant de sortie d'excitation régulée du courant de sortie d'excitation (89) générée par le régulateur de courant (82) et le circuit d'excitation présente une entrée de gradation (102) pour varier le réglage du régulateur de courant (82).

6. Procédé d'alimentation d'au moins une DEL (17a à 17c) avec un circuit d'excitation (10) comprenant les étapes suivantes :
a) une étape d'alimentation (120), dans laquelle une tension alternative de réseau sinusoïdale (18) est alimentée dans le circuit d'excitation (10) avec une entrée d'excitation (14),
b) une étape de redressement (122), dans laquelle la tension alternative de réseau sinusoïdale (18) alimentée dans l'étape d'alimentation (120) est redressée,
c) une étape de correction de facteur de puissance (124), dans laquelle, avec un moyen de chargement (44) commandable, un condensateur (52) est chargé avec la tension alternative de réseau sinusoïdale redressée (35) dans l'étape de redressement (120) à une tension de condensateur (57) dépendante d'une commande (51) du moyen de chargement (44) et dans laquelle, avec un circuit de régulation (40), une valeur réelle est déterminée à partir de la tension de condensateur (57) et la valeur réelle déterminée est régulée sur une valeur de consigne par la commande du moyen de chargement (44), la valeur réelle étant déterminée dans l'étape de correction du facteur de puissance (124) avec une branche de mesure (60) connectée entre le potentiel positif (64) du condensateur (52) et une entrée de mesure (58) du circuit de régulation (40), la branche de mesure (60) présentant une ou plusieurs résistances (66, 67) connectées en série et/ou en parallèle,
d) une étape de régulation de courant (130), dans laquelle, avec au moins un régulateur de courant (82), une intensité de courant de sortie d'excitation régulée d'un courant de sortie d'excitation (89) est générée à partir de la tension de condensateur (57) du condensateur (52) pour alimenter la DEL (17a à 17c),
e) une étape d'influence (136), dans laquelle la valeur réelle déterminée est influencée avec un circuit d'influence (72) en fonction d'une grandeur d'influence,
f) une étape de mesure (132), dans laquelle une tension (109) chutant dans le régulateur de courant (82) est déterminée,
g) une étape de commande (134), dans laquelle la grandeur d'influence est réglée de telle sorte que la tension (109) déterminée dans l'étape de mesure (132) est minimisée,
**caractérisé en ce que**
h) lors de l'étape d'influence (136) la valeur réelle déterminée est influencée avec un commutateur (78) du circuit d'influence (72) connecté entre un noeud (74) de la branche de mesure (60) et un potentiel de référence (34) du circuit d'excitation (10), **en ce que** l'intensité de courant d'un courant (80) entre le noeud de la branche de mesure (74) et le potentiel de référence (34) est variée avec le commutateur (78).

7. Procédé selon la revendication 6,
**caractérisé en ce que**
dans l'étape de correction du facteur de puissance (124) un courant (55) avec une variation temporelle est absorbé par le circuit de correction du facteur de puissance (36) pour charger la capacité, le courant présentant essentiellement la même variation temporelle que la tension alternative de réseau sinusoïdale redressée (35).

8. Procédé selon la revendication 6 ou 7,
**caractérisé par**
une étape de lissage, dans laquelle des pics de courant et/ou de tension causés par des processus de commutation du commutateur (78) dans le circuit d'influence (72) sont lissés avec un condensateur de lissage (116) connecté entre le potentiel positif (64) du condensateur (52) et un noeud (118) de la branche de manipulation (72).

9. Procédé selon l'une des revendications 6 à 8,
**caractérisé en ce que**
l'étape de mesure (132) est exécutée avec un convertisseur analogique-numérique et l'étape de commande (134) avec un générateur pour générer un signal de sortie modulé en largeur d'impulsion d'un microcontrôleur (98) et le microcontrôleur (98) génère un facteur de durée d'impulsions du signal de sortie modulé en largeur d'impulsion correspondant à la grandeur d'influence en fonction de la tension (109) mesurée avec le convertisseur analogique-numérique.

10. Procédé selon l'une des revendications 6 à 9,
**caractérisé en ce que**
l'étape de régulation de courant (130) présente une étape de réglage, dans laquelle l'intensité de courant de sortie d'excitation régulée du courant de sortie d'excitation (89) générée avec le régulateur de courant (82) est réglée, et le réglage du régulateur de courant (82) est varié dans une étape de gradation avec une entrée de gradation (102) du circuit d'excitation (10).

11. Moyen d'éclairage (12) avec au moins une DEL (17a à 17c),
**caractérisé en ce que**
le moyen d'éclairage (12) présente un circuit d'excitation (10) selon l'une des revendications 1 à 5 et est conçu de façon à alimenter la au moins une DEL (17a à 17c) avec le circuit d'excitation (10).
